Europäisches Patentamt

(19) European Patent Office

Office européen des brevets

(11) Numéro de publication: **0 048 197**
**A1**

(12) **DEMANDE DE BREVET EUROPEEN**

(21) Numéro de dépôt: **81401381.9**

(22) Date de dépôt: **04.09.81**

(51) Int. Cl.³: **A 01 B 61/04**

(30) Priorité: **12.09.80 FR 8019703**

(43) Date de publication de la demande:
**24.03.82 Bulletin 82/12**

(84) Etats contractants désignés:
**BE DE GB IT NL SE**

(71) Demandeur: **SOCIETE KONGSKILDE-FRANCE S.A.**
**Rue Ampère Zone Industrielle**
**F-45800 Saint Jean de Braye(FR)**

(72) Inventeur: **Boudin, Jean-Pierre**
**11, rue du Champdoux**
**F-45 560 Saint Denis en Val(FR)**

(74) Mandataire: **Vander-Heym, Roger et al,**
**172 Boulevard Voltaire**
**F-75011 Paris(FR)**

(54) **Dispositif de sécurité pour dents de sous-soleurs.**

(57) Dispositif de sécurité pour dents de sous-soleurs du genre de ceux dont chaque dent est articulée sur le bâti et immobilisée en rotation par un boulon pouvant être cisaillé lorsqu'elle rencontre un obstacle important, caractérisé en ce que l'axe (4) d'articulation de chaque dent (3) est situé à la partie supérieure d'une lumière (7) pratiquée dans ladite dent et s'étendant obliquement vers le bas dans le sens d'avancement de cette dernière.

Fig.1

La présente invention est relative à un dispositif de sécurité pour dents de sous-soleurs.

Un sous-soleur est une machine agricole pourvue de dents dont la pointe est susceptible de s'étendre dans le sol plus profondément qu'un soc de charrue.

Durant le labour, le soc de la charrue tasse les couches profondes qui ne sont pas atteintes par l'outil et forme ce que l'on appelle une semelle de labour qui s'oppose à la pénétration des racines et à la circulation de l'eau.

Les sous-soleurs ont pour but de briser cette semelle de labour.

Naturellement, comme les extrémités des dents s'étendent profondément dans le sol, elles rencontrent fréquemment des obstacles et il est nécessaire de prévoir sur chaque dent un système de sécurité lui permettant de pivoter vers l'arrière lorsqu'elle rencontre un obstacle.

Un tel système est constitué par un boulon taré au cisaillement et situé au-dessous de l'axe de rotation de la dent.

Lorsqu'une dent rencontre un obstacle, elle doit pouvoir s'escamoter sans effort vers le haut par pivotement. Un tel résultat peut être obtenu si, en position normale de travail, la pointe de la dent est située sur la verticale passant par son axe de rotation. Pour obtenir une telle configuration, il est donc nécessaire de réaliser des dents ayant sensiblement la forme d'un demi-cercle. Cette solution a l'inconvénient d'être très onéreuse en raison de la quantité de métal nécessaire à la fabrication et des chutes inhérentes qui en résultent.

C'est pour cette raison que la plupart des dents existantes sont articulées en un point qui est situé en arrière par rapport à leur pointe et, de ce fait, lorsqu'une dent rencontre un obstacle elle commence par s'enfoncer dans le sol après le cisaillement du boulon de sécurité en augmentant les efforts nécessaires à la traction et en risquant de provoquer la déformation du châssis.

La présente invention, qui remédie à ces inconvénients, est remarquable en ce que l'axe d'articulation de chaque dent est situé à la partie supérieure d'une lumière pratiquée dans ladite dent et s'étendant obliquement vers le bas dans le sens d'avancement de cette dernière.

De cette façon, lors de la rupture du boulon de sécurité, la pointe de la dent prend appui dans le sol, sans s'enfoncer, et ladite dent pivote autour de sa pointe grâce à sa lumière qui se déplace vers le haut par rapport à l'axe d'articulation.

L'invention sera mieux comprise par la description qui va suivre faite en se référant aux dessins annexés à titre d'exemple indicatif seulement, sur lesquels :

La figure 1 est une vue en élévation d'une dent conforme à l'invention montée sur le châssis de la machine;

La figure 2 est une vue analogue à la figure 1 montrant la position de la dent après rupture du boulon de sécurité;

La figure 3 est la vue de dessous de la figure 1;

La figure 4 est une vue analogue à celle 1, montrant à plus grande échelle la possibilité d'utiliser un dispositif de sécurité automatique, la partie inférieure de la dent n'étant pas représentée;

La figure 5 est la vue de dessus de la figure 4;

La figure 6 est une vue analogue à la figure 4 montrant la position des organes mobiles après déclenchement du dispositif de sécurité;

La figure 7 montre, à plus grande échelle, le détail A de la figure 1.

En se reportant aux dessins, on voit que 1 schématise le bâti de la machine sur lequel est fixée une chape 2 . Entre les ailes de la chape 2 est articulée une dent 3 par l'entremise d'un axe 4.

De la façon usuelle, la dent 3 est immobilisée en rotation par un boulon 5 taré au cisaillement. Lorsque la pointe 6 de la dent rencontre un obstacle important, le boulon de sécurité se rompt.

Selon l'invention, la partie supérieure de la dent 3 présente une lumière 7 traversée par l'axe 4 et s'étendant obliquement vers le bas dans le sens de l'avancement de ladite dent (sens de la Flèche $F_1$).

De préférence et comme montré sur les dessins, la partie inférieure de la lumière 7 est établie de manière à permettre le passage du boulon 5 de sécurité avec un minimum de jeu.

Lors de la rupture du boulon 5, la pointe 6 de la dent prend appui dans le sol et, sous l'effet de la traction ( sens de la flèche $F_1$), ladite dent pivote en se soulevant.

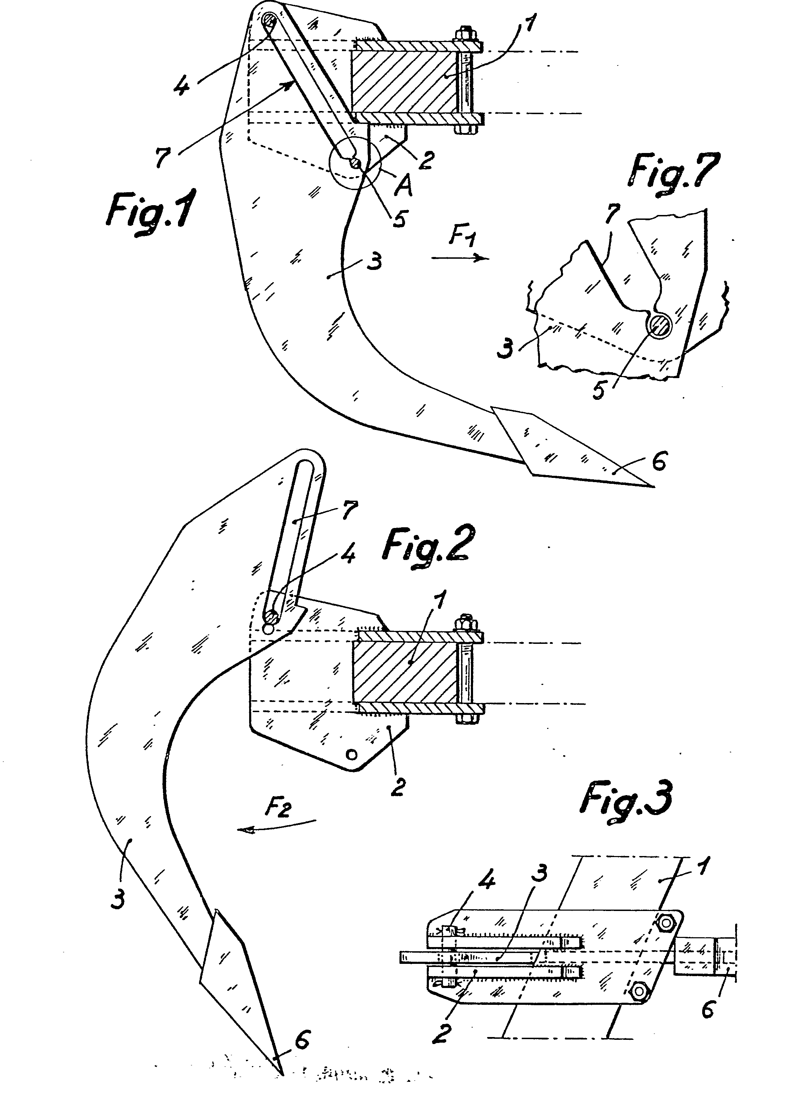

Il faut noter que le pivotement de la dent vers l'arrière (flèche $F_2$ figure 2) peut se poursuivre au-delà de la position représentée sur la figure 2.

On connaît aussi des dispositifs automatiques permettant de remplacer le boulon de sécurité.

De tels dispositifs,sont basés sur le principe du "dépassement de point mort" et comportent deux biellettes articulées entre elles par une de leurs extrémités et par chacune des autres respectivement sur la partie supérieure de la dent et sur le châssis, l'axe d'articulation médian étant soumis à l'action d'un ressort qui applique l'une des biellettes contre une butée réglable de façon à ce que ledit axe médian soit situé, par rapport au sens d'avancement de la machine, en arrière de la ligne joignant les deux autres axes d'articulation.

Naturellement, un tel dispositif pourrait être utilisé sur la dent à lumière de l'invention. Cependant comme il est en partie disposé au-dessus de la dent, il s'oppose au pivotement total de cette dernière et il en résulte que la pointe de ladite dent ne peut pas sortir du sol.

Selon l'invention, on propose un dispositif différent.

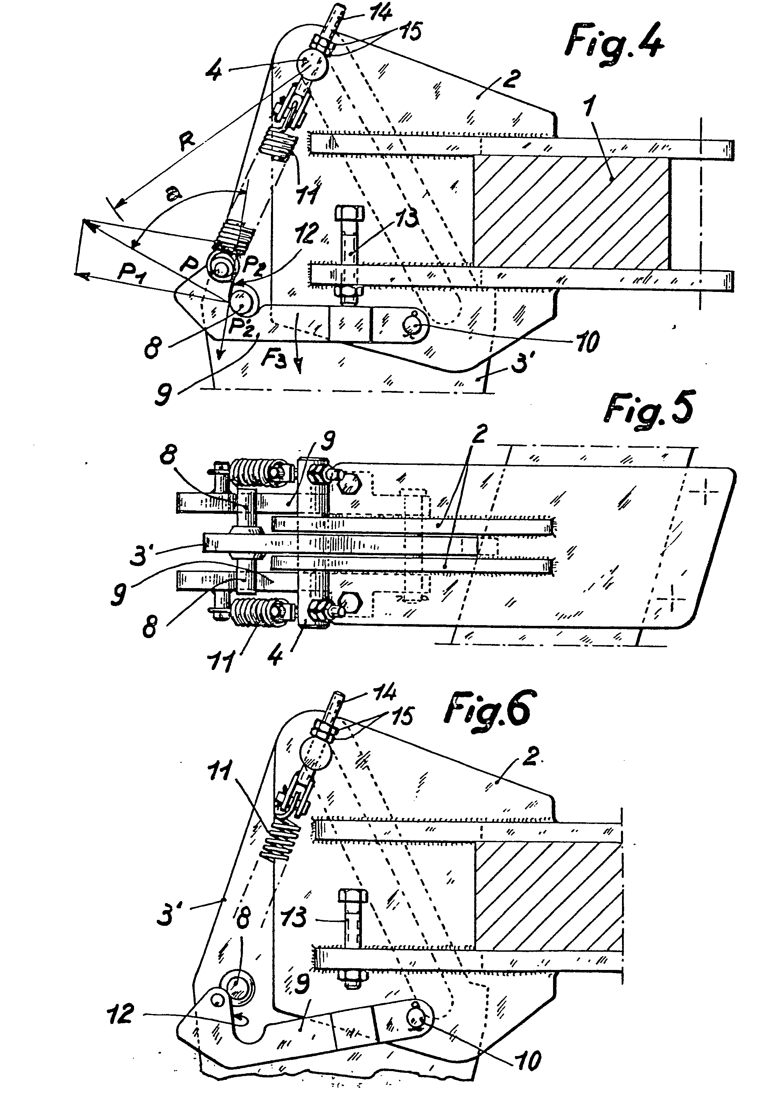

En se reportant à la figure 4, on voit que la partie supérieure de chaque dent 3' présente un doigt latéral 8 en prise avec un crochet pivotant 9, articulé sur un axe IO de la chape 2, situé en avant dudit doigt par rapport au sens d'avancement de la machine, ledit crochet étant appliqué contre le doigt 8 par l'entremise d'un ressort 11.

Comme montré sur les figures 4 à 6 et pour chaque dent, le dispositif décrit ci-dessus est double et est disposé de part et d'autre de la chape 2.

Lorsque la dent rencontre un obstacle , le doigt 8 est soumis à une force $\underline{P}$ qui l'applique contre la face 12 du crochet 9 selon une direction qui est tangente au cercle de rayon R centré sur l'axe 4 et passant par le point de contact dudit doigt avec ledit crochet.

Le crochet 9 est conçu de façon à ce que sa face 12 forme un angle $\underline{a}$ (légèrement inférieur à 90°) avec la direction de la force $\underline{P}$.

La force $\underline{P}$ peut être décomposée en deux forces $P_1$ et $P_2$ respectivement normale et parallèle à la face 12. Selon le principe de l'action et de la réaction, le crochet 9 est donc soumis à une force $P'2$ égale à celle $P_2$ , mais de sens opposé, qui tend à le faire pivoter vers le bas, selon la flèche $F_3$ , lorsque sa valeur sera supérieure à la force exercée sur ledit crochet 9 par le ressort 11. Lorsque la va-

- 5 -

0048197

leur précitée est atteinte, le bras pivote et le doigt 8 échappe au crochet 9 ( figure 6).

A partir de ce moment, la dent peut pivoter et remonter comme décrit en regard des figures 1 à 3.

Selon une autre caractéristique de l'invention, le crochet 9 est appliqué contre une butée réglable constituée par une vis 13 portée par la chape 2.

Par la manoeuvre de la vis 13 il est possible de faire varier l'angle $a$ .On comprend que plus cet angle tend vers 90° plus la pointe de la dent devra être soumise à une force importante pour provoquer le déclenchement.

La valeur de la force de déclenchement peut également être réglée en modifiant la tension initiale du ressort 11 dont l'extrémité supérieure est reliée à une tige filetée 14 traversant l'axe 4 et maintenue par des écrous 15.

Pour enclencher la dent, il suffit, après avoir relevé le bâti de la laisser pivoter en sens inverse celle-ci reprenant sa place par gravité.

REVENDICATIONS

1-Dispositif de sécurité pour dents de sous-soleurs du genre de ceux dont chaque dent est articulée sur le bâti et immobilisée en rotation par un boulon pouvant être cisaillé lorsqu'elle rencontre un obstacle important, caractérisé en ce que l'axe (4) d'articulation de chaque dent (3) est situé à la partie supérieure d'une lumière (7) pratiquée dans ladite dent et s'étendant obliquement vers le bas dans le sens d'avancement de cette dernière.

2-Dispositif selon la revendication 1 du genre de ceux dont le boulon de cisaillement est remplacé par un déclenchement automatique, caractérisé en ce que la dent (3) présente un doigt (8) en prise avec un crochet (9) appliqué sous ledit doigt par l'entremise d'un ressort (11) ledit crochet étant articulé sur le bâti en un point (10) situé en avant dudit doigt (8) par rapport au sens d'avancement de la dente, la force à laquelle la dent est soumise appliquant ledit doigt contre une face (12) du crochet formant, en position enclenchée, un angle (a) inférieur à 90°, avec la direction de la tangente au cercle centré sur l'axe d'articulation (4) et passant par le point de contact du doigt 8 avec ladite face (12).

3-Dispositif selon la revendication 3, caractérisé en ce que le crochet (9) est appliqué par son ressort (11) contre une butée (13) réglable du bâti, le déplacement du point de butée permettant de faire varier la valeur de l'angle (a) défini à la revendication 2.

4-Dispositif selon l'une quelconque des revendications 2 et 3, caractérisé en ce que la force nécessaire pour provoquer le déclenchement peut être prédéterminée en réglant la tension initiale du ressort (11).

0048197

**Fig.1**

4

7

A

2

5

3

F₁

**Fig.7**

7

3

5

6

**Fig.2**

7

4

1

2

F₂

3

6

**Fig.3**

4

3

1

2

6

0048197

Fig.4

Fig.5

Fig.6

0048197

Numéro de la demande

EP 81 40 1381

**Office européen des brevets**

## RAPPORT DE RECHERCHE EUROPEENNE

| Catégorie | Citation du document avec indication, en cas de besoin, des parties pertinentes | Revendication concernée |
|---|---|---|
| | US - A - 3 416 611 (FISHER)<br><br>* colonne 2, lignes 18-71; figures 1 et 2 * | 1 |
| | --- | |
| | DE - C - 311 297 (HILLER)<br><br>* page 2, lignes 16-61; figure 1 * | 1 |
| | --- | |
| | DE - C - 415 601 (BERLINER A.G. FUR EISENGIESSEREI UND MASCHINEN-FABRIKATION)<br><br>* page 2, lignes 19-35; figures 1 et 2 * | 1 |
| | --- | |
| | FR - A - 1 304 137 (THIEME)<br><br>* en entier * | 2,3,4 |
| | --- | |
| A | US - A - 3 439 748 (WARD) | |
| A | FR - A - 1 315 399 (INTERNATIONAL HARVESTER CO.) | |
| A | FR - A - 1 444 845 (INTERNATIONAL HARVESTER CO.) | |
| A | FR - A - 2 400 311 (PATENT CONCERN)<br><br>* page 3, lignes 10-17; figure 4 * | 1 |
| | --------- | |

### CLASSEMENT DE LA DEMANDE (Int. Cl.³)

A 01 B 61/04

### DOMAINES TECHNIQUES RECHERCHES (Int. Cl.³)

A 01 B

### CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 03.12.1981 | VERDOODT |

OEB Form 1503.1 06.78